# EUROPEAN PATENT SPECIFICATION

(11) **EP 3 917 871 B1**
(45) Date of publication and mention of the grant of the patent: **19.10.2022**
(21) Application number: 19842760.1
(22) Date of filing: 30.12.2019
(51) Int. Cl.: B67D 1/00, A47J 31/40

(54) **AUTOMATIC SYSTEM FOR DISPENSING LIQUID INGREDIENTS FOR INSTANT BEVERAGE PRODUCTION**
AUTOMATISCHES SYSTEM ZUR AUSGABE VON FLÜSSIGEN BESTANDTEILEN FÜR INSTANTGETRÄNKEHERSTELLUNG
SYSTÈME AUTOMATIQUE DE DISTRIBUTION D'INGRÉDIENTS LIQUIDES POUR LA PRODUCTION DE BOISSONS INSTANTANÉES

(30) Priority: 31.01.2019 IT 201900001443
(43) Date of publication of application: 08.12.2021
(73) Proprietor: Prototipia Srl, 70122 Bari (BA) (IT)
(72) Inventor: IAVERNARO, Fulvio, 70037 Ruvo Di Puglia (BA) (IT); DIGREGORIO, Giuseppe, 70131 Bari (BA) (IT); LOSITO, Pierfrancesco, 70125 Bari (BA) (IT); DE LEO, Alberto, 70121 Bari (BA) (IT)
(74) Representative: Giuliano, Natalia
(86) International application number: PCT/IB2019/061443
(87) International publication number: WO 2020/157565

(56) References cited:
- WO-A1-2017/197113
- US-B2- 9 475 683

## Description

The present invention relates to an automatic system for dispensing liquid ingredients for the instant production of beverages.

In particular, the present invention relates to an automatic system for dispensing liquid ingredients for the instant production of beverages, for example of the type capable of producing cocktails or long drinks, according to predefined and modifiable recipes.

As is known, there are machines capable of dispensing liquids to make drinks or cocktails.

An example is reported in the patent application US2018186621 which describes a beverage dispensing apparatus comprising a housing, one or more ingredient cartridges removably coupled to the housing, a mixing container, a dispensing nozzle and a control unit. A user provides commands from an intelligent device to a control unit that understand the request to beverage by the user himself. In response to this, the ingredients are dispensed from one or more of the cartridges into the mixing container and the mixed ingredients are poured from the mixing container into a container.

A second known solution is described in the patent application WO2018055643, in which automated beverage systems for the preparation of beverages including one or more ingredients for beverages are reported. In one embodiment, a beverage system can be arranged so as to move a drink cup between a plurality of distribution stations, and one or more beverage ingredients can be delivered into the cup of a beverage in each of the plurality of distribution stations. The beverage system may include one or more container fittings for connecting beverage containers to the beverage system. Furthermore, the beverage system may include a stirrer associated with the beverage cup for mixing the beverage ingredients after they have been dispensed into the beverage cup at the dispensing stations.

Document US 9 475 683 B2 discloses an automatic system for dispensing liquid ingredients for instant beverage production, comprising an automatic dispensing device configured to manage requests of beverages and automatically produce the required beverage; a management software for the configuration and the management of the automatic dispensing device; a remote server communicating with the automatic dispensing device and with the management software, configured to store and process data related to users of the system, to the requests of beverages and to the state of the automatic dispensing device. The dispensing device comprises an outer body with a front portion in which a dispensing area is formed and a display placed on the outer body; a plurality of reservoirs for liquids; a plurality of dispensers connected to at least one tank for liquids and managed by at least one pump module, placed in a top portion of the dispensing area; and a control unit.

However, the existing systems meter liquids delivered by setting the opening of the flow pumps. Therefore, they are very expensive and cumbersome and inaccurate. In addition, the known systems do not allow to obtain different types of preparations (cocktails, soft drinks, etc.), nor instantaneously produce the drink, by employing normally more than 30 seconds to produce the drink itself.

Scope of the present invention is to realize an automatic system of liquid ingredients for dispensing liquid ingredients for instant beverage production through the combination of the liquid ingredients provided that is little expensive and very accurate, which has compact dimensions and is able to produce different types of mixtures from a configurable list of ingredients and having, therefore, features such as to overcome the limits which still affect the current automatic mixing systems with reference to the prior art.

According to the present invention, an automatic system for dispensing of liquid ingredients for instant beverage production is provided, as defined in claim 1.

For a better understanding of the present invention, a preferred embodiment is now described, purely by way of non-limiting example, with reference to the attached drawings, in which:
- figure 1 shows a schematic view of an automatic system for dispensing liquid ingredients for instant beverage production, comprising hardware, software and communication components, according to the invention;
- figure 2 shows a schematic block view of an automatic device for dispensing liquid ingredients for instant beverage production, according to the invention;
- figure 3 shows tridimensional views of an automatic dispensing device comprises in the automatic system for dispensing liquid ingredients for instant beverage production, according to the invention;
- figure 4 shows a three-dimensional disassembled view of the automatic dispensing device of Figure 3, according to the invention;

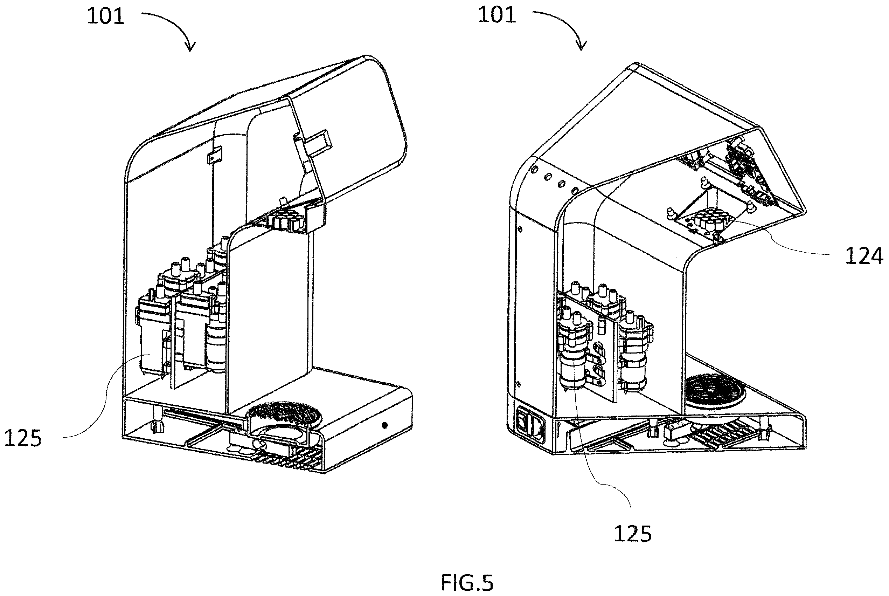

- figure 5 shows lateral section views of the automatic dispensing device of Figure 3, according to the invention;
- figure 6 shows an enlarged three-dimensional view of a load cell of the automatic dispensing device of figure 3, according to the invention;
- Figure 7 shows a tridimensional magnified view of the load cell of Figure 6, according to the invention.

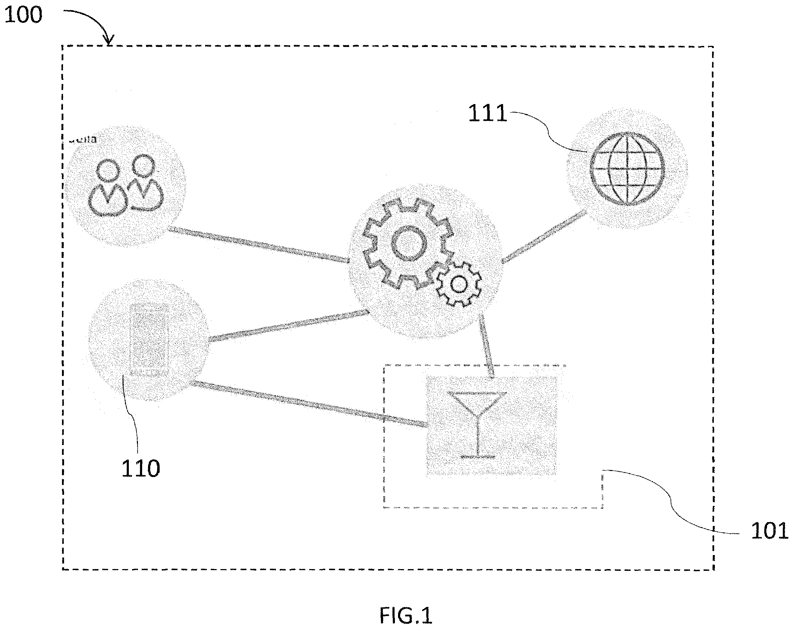

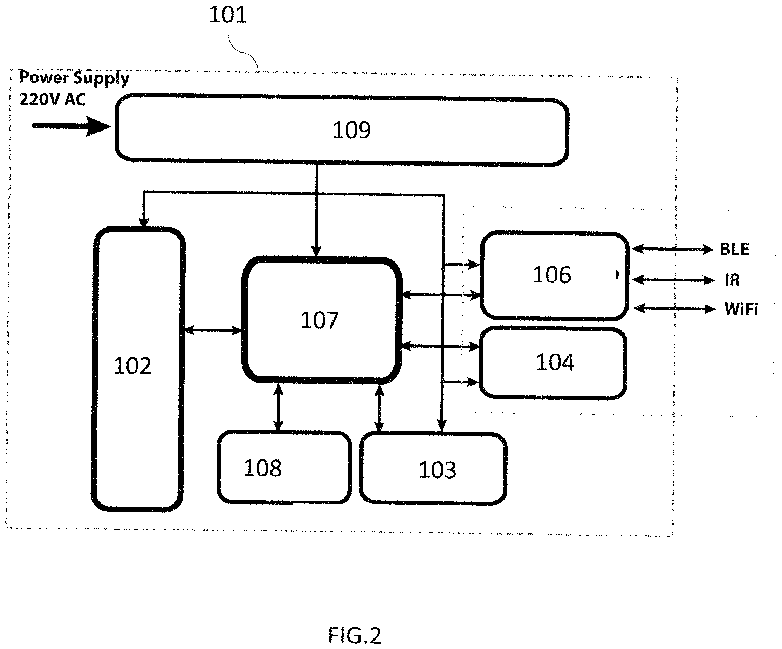

With reference to these figures and, in particular, to the figures 1 and 2, automatic system for dispensing liquid ingredients for instant beverage production is shown according to the invention. In particular, with reference to Figure 1, the automatic system 100 for dispensing liquid ingredients for instant beverage production comprises:
- an automatic dispensing device 101 configured to manage requests of preparation of drinks, carried by a user, and produce automatically drinks requests;
- a management software 110, for example an application for mobile device, for the configuration and management of the automatic dispensing device 101;
- a remote server 111 communicating with the automatic dispensing device 101 and with the management software 110, configured for storing and processing, for example, the data relating to the users of the system 100, to the drinks requests and to the status of the automatic dispensing device 101;
- a plurality of communication channels (by way of example Wi-Fi, Bluetooth, NFC, internet are to be cited) between the different sais parts of the system 100.

Advantageously according to the invention, the multiple communication channels used by the system 100 make it usable in the logic of Internet of Things (IoT).

Advantageously according to the invention, the set of mixing recipes, the preparations obtained and a menu based on customer tastes can be stored on the cloud remote server 111, to then be communicated to the automatic dispensing device 101.

Advantageously according to the invention, the automatic dispensing device 101 enables the supply of liquid ingredients corresponding to a predefined recipe and automatically manage the queues and preparation is based on remote interactions, thanks to an analysis of information stored on the remote server 111, or an analysis on the cloud, and comprise: data profiling of the consumer preferences, data related to order management, data on market trends, and information concerning the diagnostic of the automatic dispensing device 101.

Advantageously according to the invention, the data during operation of the automatic dispensing device 101 are stored, indexed and analyzed, and therefore may be rendered usable at different levels by the registered users and may be used for an analysis of type management of the performance of the company's active and passive cycle.

Advantageously according to the invention, the users can introduce on server a function that allows to create mixed custom substances and to load the corresponding recipe in the system 100. This function is achievable through the mobile application.

More in detail, with reference to Figure 2, the automatic dispensing device 101 is composed at least by the following functional blocks:
- A management block 102, of a plurality of actuation systems, such as pumps, necessary to transfer in a load cell the liquids ingredients for immediate preparation of the mixed compounds based on provided recipes and governed through algorithms for the measurement, based on the size of the same load cell, the variations of the quantity of the individual ingredients transferred;
- A monitoring block 103 for monitoring in real time the operational status of the automatic dispensing device 101, of the currents absorbed and its inclination, configured for the signaling of any alarm conditions with the possible interruption of all operations in progress;
- An interface block 104 in real-time with the user, and dedicated to the signaling of operational states of the automatic dispensing device 101 (eg via LCD display, LED arrays, LED RGB, buzzer), to the signaling of the phases of preparation of the mixed and the acquisition of the signals coming from the sensors dedicated to the acquisition of "natural gestures" (tap, double tap, manual gestures, etc.) through which it is possible to control some functions of the automatic dispensing device 101;
- A communication block 106, for the communication for example by means of Bluetooth, IR, Wi-Fi, between the automatic dispensing device 101 and the remote server for the transmission, for example, of the recipes, of the operating data, of the diagnostics, the firmware update, etc. The same communication block 106 is used for the management of queues preparation;
- A processing block 107 for processing the dispensing and preparation operations of the drinks, for example through one or more microprocessors, and capable of managing all the functional blocks present in the automatic dispensing device 101;
- A measuring block 108 for the measurement, for example, by means of the load cell, of the variations of quantities of the individual ingredients within the load cell;
- A power supply block 109 to ensure the correct operating voltages and currents of the electronic components present in the automatic dispensing device 101.

According to an aspect of the invention, the automatic dispensing device 101 is modular with discrete components.

According to an aspect of the invention, the management block 102 of the actuation systems for dispensing liquids, is also configured for monitoring, together with the monitoring block 103, the operating status of the same and currents absorbed during activity cycles. These information will be provided to the processing block 107 which will use them to take the appropriate decisions.

According to another aspect of the invention, the automatic dispensing device 101 is able to measure the variations in weight of the ingredients during the preparation steps, by means of the measuring block 108, whose signal is appropriately conditioned and filtered is sent to the processing block 107 that will use it to take the appropriate decisions. For example, the measuring block 108 comprises weight sensors of the liquid poured into the load cell, or container, from bottles or dispensing elements.

Advantageously according to the invention, the automatic dispensing device 101 controls the delivery of the ingredients based on the weight of the quantity already dispensed, without using pump flow rate control systems and therefore in a simpler, more economical and functional way.

According to another aspect of the invention, the monitoring block 103 is configured to verify in real time the inclination status of the automatic dispensing device 101 and report promptly any abnormal conditions to the processing block 107. For example, the monitoring block 103 comprises a MEMS accelerometer and other sensors through which it will also be possible to detect the "natural gestures" that the user will use to make the machine perform certain actions.

According to an aspect of the invention, the communication block 106 uses a unique communications protocol, developed on the characteristics of Bluetooth low energy (BLE), for exchanging information with the management software 110 installed on a mobile device (eg. Smartphone, laptop, etc.).

According to another aspect of the invention, the communication block 106 uses a single communication protocol, developed on the characteristics of the Wi - Fi , to communicate with the remote server 111 to carry out the update of the use and diagnostic data as well as for the remote firmware update.

Advantageously according to the invention, the data produced during the operation of the automatic dispensing device 101 are stored, indexed and analyzed, and therefore can be made available at different levels by registered users and can be used to carry out management analyzes on the trend of the company's active and passive cycle.

According to another aspect of the invention, the communication block 106 uses a single communication protocol, developed on the characteristics of the infrared receiver, for interaction with a telecommunication device for starting the preparation of the pre-programmed recipes.

Advantageously according to the invention, the user can load a plurality of recipes into the automatic dispensing device 101 which he can directly activate by means of an IR remote control.

According to another aspect of the invention, the automatic dispensing device 101 does not require physical interaction with users.

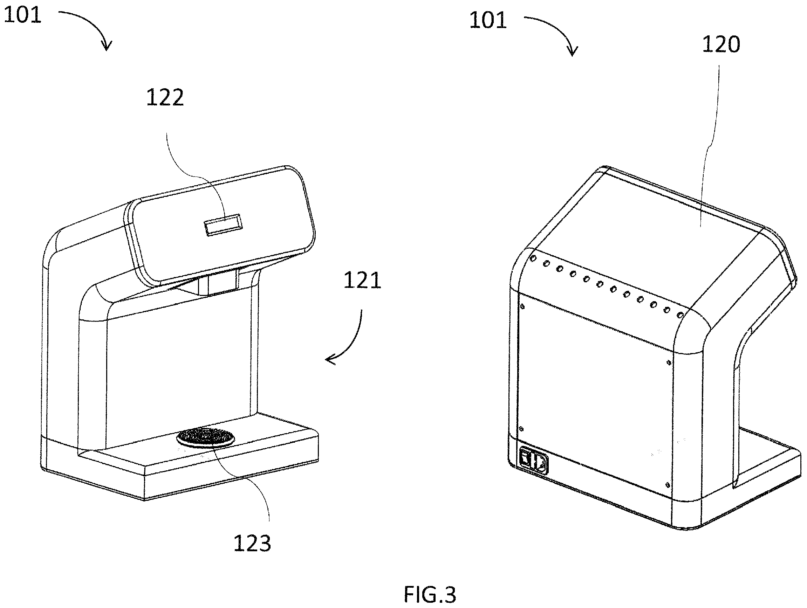

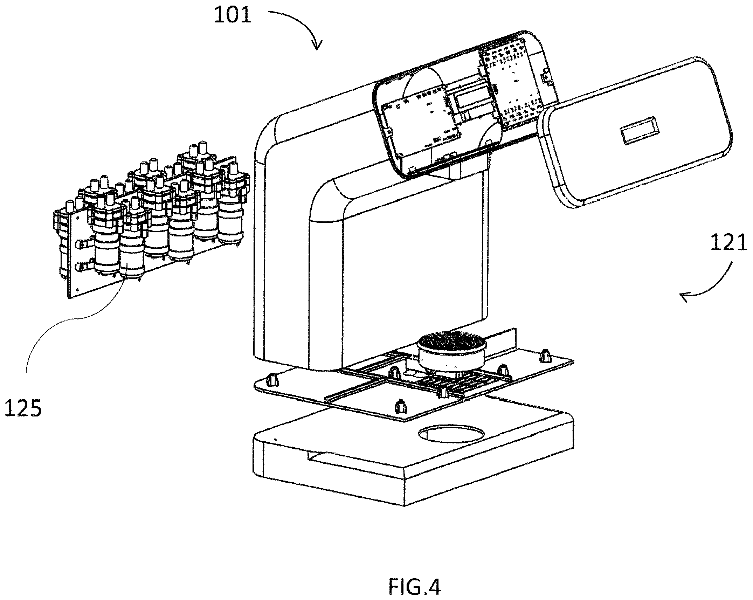

According to one embodiment, as shown in figures 3 and 4, the automatic dispensing device 101 is realized by means of:
- An outer body 120 comprising a flat base and a front portion in which a beverage dispensing area 121 and a display 122 located on the outer body 120 are formed;
- A plurality of tanks for liquids, namely liquid ingredients for the preparation of the drink, not shown in the figure;
- A plurality of dispensers 124, preferably 12, connected to at least a tank for liquids and managed by at least a pomp module 125, placed in an upper portion of the dispensing area 121;
- A command element, for example a key or a touch screen functionality of the display 122;
- A load cell 123, placed in a lower portion of the dispensing area 121 on which a container is placed in which the liquids are to be delivered;
- A control unit.

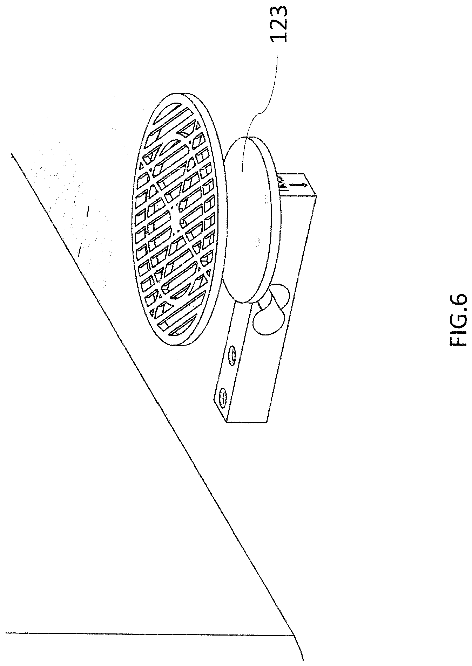

Figure 6 shows a detailed and enlarged view of the load cell 123.

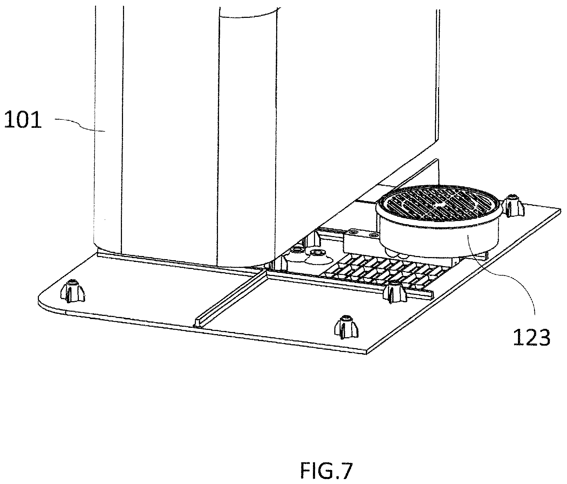

Figure 7 shows the load cell 123 mounted inside a front portion of the flat base of the outer body 120.

According to one aspect of the invention, a rear portion of the outer body 120 has a plurality of holes which allow the connection by means of pipes of the liquid reservoirs and the pump module 125, inside the outer body 120.

The management software is able to suggest to the user all the mixes that can be prepared with the liquid ingredients connected to the automatic dispensing device 101.

The management software 110 allows the selection of the mix to be prepared and sends the command to the automatic dispensing device 101. In addition, it will be possible to decide to configure predefined mix to be associated to a small infrared remote control that in a simple and fast sends the execution command directly to the device.

Advantageously according to the invention, users can create customized mixes on the management software and load the relative recipe in the automatic dispensing device 101.

Advantageously according to the invention, the set of recipes for mixing, the obtained preparations and a menu based on the tastes of customers are memorized at the remote server.

Advantageously according to the invention, the liquid ingredients are positioned outside of the device and connected through tubes for foods and specially made sealing plugs.

The management software 110 provides a function which allows to estimate whether the liquid ingredients connected to the automatic dispensing device 101 are sufficient, in terms of quantity, to deliver the required mixture and, in the negative, launch a signal of alert.

The system 100 is able to store all the usage data and to return informative reports at least on the number of mixes supplied (and which), on the quantity of consumed ingredients, on the dates and times, on the active operating times / liabilities, etc.

The system 100 also provides functionalities of predictive diagnostic functions in which all the information coming from the electronic device present on the automatic dispensing device 101 are memorized, through which it is also possible to monitor the status of the automatic dispensing device 101 and receives alarm signals in the event of a malfunction, including predicting maintenance to avoid downtime.

According to an aspect of the invention, the delivery rate of the liquids of the system 100 is variable and is higher for the last ingredient dispensed, in order to improve the mixing inside the shell.

According to another aspect of the invention, the delivery rate of the liquids of the system 100 is managed by the processing block 107 according to an algorithm and on the basis of preset parameters such as for example the density of the liquid, the total number of liquid ingredients provided in the recipe and their order of delivery, speed and preparation time.

In use, the automatic system 100 for dispensing liquid ingredients for instant beverage production has the following steps:
- loading a preset recipe via the communication block 106;
- delivering in a fixed order the plurality of ingredients provided in the recipe by means of the supply block 109;
- blocking the delivery of each individual input through the management block 102 of the plurality of actuation systems, when the load cell 123 detects the achievement of a fixed weight.

Therefore, an advantage of the automatic system for dispensing liquid ingredients for instant beverage production according to the invention is to block the dispensing automatically according to the weight of liquid dispensed in the load cell or container.

Another advantage of the automatic system 100 for dispensing liquid ingredients for instant beverage production according to the invention is to improve the production efficiency (in terms of preparation time up to 30 seconds) and the quality of the preparations in terms of respect of the proposed recipe.

Another advantage of the automatic system for dispensing liquid ingredients for instant beverage production according to the invention is that it can be easily controlled by anyone, through the management software, the IR remote control and the "natural gestures".

Another advantage of the automatic system for dispensing liquid ingredients for instant beverage production according to the invention is that it is simple to maintain and quickly replaceable, since it does not require installation.

Finally it is clear that the automatic system 100 for dispensing liquid ingredients for instant beverage production here described and illustrated can be subject to modifications and variations without thereby abandoning the scope of the present invention, as defined in the alleged claims.

## Claims

1. Automatic system (100) for dispensing liquid ingredients for instant beverage production comprising:
- an automatic dispensing device (101) configured to manage requests of beverages and automatically produce the required beverage;
- a management software (110) for the configuration and the management of the automatic dispensing device (101);
- a remote server (111) communicating with the automatic dispensing device (101) and with the management software (110), configured to store and process data related to users of the system (100), to the requests of beverages and to the state of the automatic dispensing device (101);
wherein the automatic dispensing device (101) comprises:
- an outer body (120) comprising a flat base, a front portion in which a dispensing area (121) is formed and a display (122) placed on the outer body (120);
- a plurality of reservoirs for liquids;
- a plurality of dispensers (124) connected to at least one tank for liquids and managed by at least one pump module (125), placed in a top portion of the dispensing area (121);
- a load cell (123), located at a bottom portion of the dispensing area (121) configured to receive a vessel where the liquids can be dispensed;
- a control unit.

2. Automatic system (100) according to claim 1, **characterized in that** the management software (110) is an application for a mobile device.

3. Automatic system (100) according to claim 1, **characterized in that** it is configured to dispense liquid ingredients corresponding to a preset recipe and to automatically manage the preparation queues depending on said stored data, such preparation queues being analyzed in the remote server (111).

4. Automatic system (100) according to claim 1, **characterized in that** the automatic dispensing device (101) comprises at least:
- a management block (102) for managing a plurality of actuation systems for transferring liquid ingredients in the load cell (123) for immediate preparation of the mixed compounds based on provided recipes, on measures related to the size of the load cell (123) and on variations in the quantity of each transferred ingredient;
- a monitoring block (103) for monitoring in real time the operational status of the automatic dispensing device (101), the absorbed currents and its inclination, configured to report any alarm condition and to stop all ongoing operations;
- an interface block (104) to interact in real time with a user, dedicated to report operational states of the automatic dispensing device (101) and the phases of preparation of the mixed compounds and to the acquisition of the signals coming from the sensors dedicated to the acquisition of activation gestures of the automatic dispensing device (101);
- a communication block (106) for the communication between the automatic dispensing device (101) and the remote server (111) for the transmission of said data;
- a processing block (107) for processing the dispensing operations and preparation of beverage and for managing said functional blocks (102, 103, 104, 106);
- a measurement block (108) for measuring the variations in the quantity and weight of each ingredient inside the load cell (123); and
- a supply block (109) for supplying the automatic dispensing device (101).

5. Automatic system (100) according to claim 4, **characterized in that** the processing block (107) is configured to manage the dispensing speed of the liquids based on preset parameters, including the density of the liquid, the total number of liquid ingredients expected in a recipe and their delivery order, the speed and the preparation time.

6. Automatic system (100) according to claim 4, **characterized in that** the measurement block (108) comprises weight sensors of the liquid poured into the load cell (123) .

7. Automatic system (100) according to claim 1, **characterized in that** the automatic dispensing device (101) is enabled by means of an infrared remote control.

8. Automatic system (100) according to claim 1, **characterized in that** the management software is configured to suggest the user recipes of mixed compounds able to be prepared using the liquid ingredients sent to the automatic dispensing device (101), to use recipes of mixed compounds introduced by the users, to choose the mixed compound to be prepared and send a command to the automatic dispensing device (101).

9. Automatic system (100) according to claim 1, **characterized in that** the management software (110) is configured to estimate if the liquids reservoirs connected to the automatic dispensing device (101) contain enough liquids to dispense the required mixed compound and to emit a warning signal if the liquids reservoirs contain an inadequate quantity of liquids.

10. Automatic system (100) according to claim 1, **characterized in that** it is configured to store all usage data and to produce informative reports regarding number and type of the dispensed beverage, amount of consumed liquids, the dates and times, durations of the active / passive functioning.

## Patentansprüche

1. Automatisches System (100) zur Ausgabe von flüssigen Zutaten für die Herstellung von Instant-Getränken, umfassend:
- eine automatische Ausgabevorrichtung (101), die so konfiguriert ist, dass sie Getränkeanforderungen verwaltet und das gewünschte Getränk automatisch herstellt;
- eine Verwaltungssoftware (110) für die Konfiguration und die Verwaltung der Ausgabevorrichtung (101);
- einen Remote-Server (111), der mit der automatischen Ausgabevorrichtung (101) und mit der Verwaltungssoftware (110) kommuniziert und so konfiguriert ist, dass er Daten speichert und verarbeitet, die sich auf die Benutzer des Systems (100), auf die Anforderungen von Getränken und auf den Zustand der automatischen Ausgabevorrichtung (101) beziehen;
wobei die automatische Ausgabevorrichtung (101) umfasst:
- einen äußeren Körper (120), der eine flache Basis, einen vorderen Abschnitt, in dem ein Ausgabebereich (121) gebildet ist, und eine auf dem äußeren Körper (120) angeordnete Anzeige (122) umfasst;
- eine Mehrzahl von Behältern für Flüssigkeiten;
- eine Mehrzahl von Spendern (124), die mit mindestens einem Flüssigkeitsbehälter verbunden sind und von mindestens einem Pumpmodul (125) gesteuert werden, das in einem oberen Teil des Spenderbereichs (121) angeordnet ist;
- eine Wiegezelle(123), die sich an einem unteren Abschnitt des Abgabebereichs (121) befindet und so konfiguriert ist, dass sie ein Gefäß aufnimmt, in das die Flüssigkeiten abgegeben werden können;
- eine Steuereinheit.

2. Automatisches System (100) nach Anspruch 1, **dadurch gekennzeichnet, dass** die Verwaltungssoftware (110) eine Anwendung für ein mobiles Gerät ist.

3. Automatisches System (100) nach Anspruch 1, **dadurch gekennzeichnet, dass** es so konfiguriert ist, dass es flüssige Zutaten entsprechend einem voreingestellten Rezept ausgibt und die Zubereitungswarteschlangen in Abhängigkeit von den gespeicherten Daten automatisch verwaltet, wobei diese Zubereitungswarteschlangen in dem entfernten Server (111) analysiert werden.

4. Automatisches System (100) nach Anspruch 1, **dadurch gekennzeichnet, dass** die automatische Ausgabevorrichtung (101) mindestens umfasst:
- einen Verwaltungsblock (102) zum Verwalten einer Mehrzahl von Betätigungssystemen zum Übertragen von flüssigen Bestandteilen in die Wiegezelle(123) für die sofortige Zubereitung der gemischten Verbindungen auf der Grundlage von bereitgestellten Rezepten, von Maßnahmen, die sich auf die Größe der Wiegezelle (123) beziehen, und von Variationen in der Menge jedes übertragenen Bestandteils;
- einen Überwachungsblock (103) zur Echtzeitüberwachung des Betriebszustands der automatischen Ausgabevorrichtung (101), der aufgenommenen Ströme und ihrer Neigung, der so konfiguriert ist, dass er jeden Alarmzustand meldet und alle laufenden Vorgänge stoppt;
- einen Schnittstellenblock (104) zur Interaktion in Echtzeit mit einem Benutzer, der für die Meldung der Betriebszustände der automatischen Ausgabevorrichtung (101) und der Phasen der Zubereitung der gemischten Verbindungen sowie für die Erfassung der von den Sensoren kommenden Signale bestimmt ist, die für die Erfassung der Aktivierungsgesten der automatischen Ausgabevorrichtung(101) bestimmt sind;
- einen Kommunikationsblock (106) für die Kommunikation zwischen der automatischen Ausgabevorrichtung (101) und dem entfernten Server (111) für die Übertragung der Daten;
- einen Verarbeitungsblock (107) zur Verarbeitung der Ausgabevorgänge und der Zubereitung von Getränken und zur Verwaltung der Funktionsblöcke (102, 103, 104, 106);
- einen Messblock (108) zum Messen der Mengen- und Gewichtsschwankungen jedes Bestandteils innerhalb der Wiegezelle(123); und
- einen Versorgungsblock (109) zur Versorgung der automatischen Ausgabevorrichtung (101).

5. Automatisches System (100) nach Anspruch 4, **dadurch gekennzeichnet, dass** der Verarbeitungsblock (107) so konfiguriert ist, dass er die Ausgabegeschwindigkeit der Flüssigkeiten auf der Grundlage voreingestellter Parameter steuert, einschließlich der Dichte der Flüssigkeit, der Gesamtzahl der in einem Rezept erwarteten flüssigen Zutaten und ihrer Lieferreihenfolge, der Geschwindigkeit und der Zubereitungszeit.

6. Automatisches System (100) nach Anspruch 4, **dadurch gekennzeichnet, dass** der Messblock (108) Gewichtssensoren für die in die Wiegezelle (123) eingefüllte Flüssigkeit umfasst.

7. Automatisches System (100) nach Anspruch 1, **dadurch gekennzeichnet, dass** die automatische Ausgabevorrichtung (101) mittels einer Infrarot-Fernbedienung aktiviert wird.

8. Automatisches System (100) nach Anspruch 1, **dadurch gekennzeichnet, dass** die Verwaltungssoftware so konfiguriert ist, dass sie dem Benutzer Rezepte von Mischungen vorschlägt, die unter Verwendung der an die automatische Ausgabevorrichtung (101) gesendeten flüssigen Zutaten zubereitet werden können, dass sie von den Benutzern eingegebene Rezepte von Mischungen verwendet, dass sie die zuzubereitende Mischung auswählt und dass sie einen Befehl an die automatische Ausgabevorrichtung (101) sendet.

9. Automatisches System (100) nach Anspruch 1, **dadurch gekennzeichnet, dass** die Verwaltungssoftware (110) so konfiguriert ist, dass sie abschätzen kann, ob die an die automatische Ausgabevorrichtung (101) angeschlossenen Flüssigkeitsbehälter genügend Flüssigkeit enthalten, um die erforderliche gemischte Verbindung auszugeben, und dass sie ein Warnsignal ausgibt, wenn die Flüssigkeitsbehälter eine unzureichende Menge an Flüssigkeit enthalten.

10. Automatisches System (100) nach Anspruch 1, **dadurch gekennzeichnet, dass** es so konfiguriert ist, dass es alle Nutzungsdaten speichert und informative Berichte über die Anzahl und Art der ausgegebenen Getränke, die Menge der verbrauchten Flüssigkeiten, die Daten und Zeiten sowie die Dauer des aktiven/passiven Betriebs erstellt.

## Revendications

1. Système automatique (100) pour distribuer des ingrédients liquides pour la production de boissons instantanées comprenant :
- un dispositif de distribution automatique (101) configuré pour gérer les demandes de boissons et produire automatiquement la boisson requise ;
- un logiciel de gestion (110) pour la configuration et la gestion du dispositif de distribution automatique (101) ;
- un serveur distant (111) communiquant avec le dispositif de distribution automatique (101) et avec le logiciel de gestion (110), configuré pour stocker et traiter des données relatives aux utilisateurs du système (100), aux demandes de boissons et à l'état du dispositif de distribution automatique (101) ;
dans lequel le dispositif de distribution automatique (101) comprend :
- un corps extérieur (120) comprenant une base plate, une partie avant dans laquelle une zone de distribution (121) est formée et un affichage (122) placé sur le corps extérieur (120) ;
- une pluralité de réservoirs pour les liquides ;
- une pluralité de distributeurs (124) reliés à au moins un réservoir de liquides et gérés par au moins un module de pompe (125), placés dans une partie supérieure de la zone de distribution (121) ;
- une cellule de charge (123), située à une partie inférieure de la zone de distribution (121) configurée pour recevoir un récipient où les liquides peuvent être distribués ;
- une unité de commande.

2. Système automatique (100) selon la réclamation 1, **caractérisé en ce que** le logiciel de gestion (110) est une application pour un dispositif mobile.

3. Système automatique (100) selon la réclamation 1, **caractérisé en ce qu'**il est configuré pour distribuer des ingrédients liquides correspondant à une recette prédéfinie et pour gérer automatiquement les files de préparation en fonction desdites données stockées, ces files de préparation étant analysées dans le serveur distant (111).

4. Système automatique (100) selon la réclamation 1, **caractérisé en ce que** le dispositif de distribution automatique (101) comprend au moins :
- un bloc de gestion (102) pour gérer une pluralité de systèmes d'actionnement pour transférer des ingrédients liquides dans la cellule de charge (123) pour la préparation immédiate des composés mélangés sur la base de recettes fournies, de mesures liées à la taille de la cellule de charge (123) et de variations de la quantité de chaque ingrédient transféré ;
- un bloc de surveillance (103) pour surveiller en temps réel l'état opérationnel du dispositif de distribution automatique (101), les courants absorbés et son inclinaison, configuré pour signaler toute condition d'alarme et pour arrêter toutes les opérations en cours ;
- un bloc d'interface (104) pour interagir en temps réel avec un utilisateur, dédié au signalement des états opérationnels du dispositif de distribution automatique (101) et des phases de préparation des composés mélangés et à l'acquisition des signaux provenant des capteurs dédiés à l'acquisition des gestes d'activation du dispositif de distribution automatique (101) ;
- un bloc de communication (106) pour la communication entre le dispositif de distribution automatique (101) et le serveur distant (111) pour la transmission desdites données ,
- un bloc de traitement (107) pour traiter les opérations de distribution et de préparation de boisson et pour gérer lesdits blocs fonctionnels (102, 103, 104, 106) ,
- un bloc de mesure (108) pour mesurer les variations de la quantité et du poids de chaque ingrédient à l'intérieur de la cellule de charge (123) ; et
- un bloc d'alimentation (109) pour alimenter le dispositif de distribution automatique (101).

5. Système automatique (100) selon la réclamation 4, **caractérisé en ce que** le bloc de traitement (107) est configuré pour gérer la vitesse de distribution des liquides en fonction de paramètres prédéfinis, notamment la densité du liquide, le nombre total d'ingrédients liquides attendus dans une recette et leur ordre de livraison, la vitesse et le temps de préparation.

6. Système automatique (100) selon la réclamation 4, **caractérisé en ce que** le bloc de mesure (108) comprend des capteurs de poids du liquide versé dans la cellule de charge (123).

7. Système automatique (100) selon la réclamation 1, **caractérisé en ce que** le dispositif de distribution automatique (101) est activé au moyen d'une télécommande infrarouge.

8. Système automatique (100) selon la réclamation 1, **caractérisé en ce que** le logiciel de gestion est configuré pour suggérer à l'utilisateur des recettes de composés mixtes pouvant être préparés en utilisant les ingrédients liquides envoyés au dispositif de distribution automatique (101), pour utiliser les recettes de composés mixtes introduites par les utilisateurs, pour choisir le composé mixte à préparer et envoyer une commande au dispositif de distribution automatique (101).

9. Système automatique (100) selon la réclamation 1, **caractérisé en ce que** le logiciel de gestion (110) est configuré pour estimer si les réservoirs de liquides connectés au dispositif de distribution automatique (101) contiennent suffisamment de liquides pour distribuer le composé mélangé requis et pour émettre un signal d'avertissement si les réservoirs de liquides contiennent une quantité inadéquate de liquides.

10. Système automatique (100) selon la réclamation 1, **caractérisé en ce qu'**il est configuré pour stocker toutes les données d'utilisation et pour produire des rapports informatifs concernant le nombre et le type de boisson distribuée, la quantité de liquides consommés, les dates et heures, les durées du fonctionnement actif / passif.
